# FASCICULE DE BREVET EUROPEEN

(11) **EP 4 416 386 B1**
(45) Date de publication et mention de la délivrance du brevet: **03.12.2025**
(21) Numéro de dépôt: 22801522.8
(22) Date de dépôt: 14.10.2022
(51) Int. Cl.: F02K 1/04, F02K 1/68, F02K 1/82, B64D 29/06, B64D 33/02

(54) **ENSEMBLE ARRIÈRE POUR NACELLE DE TURBORÉACTEUR**
HINTERE ANORDNUNG FÜR EINE TURBOSTRAHL-TRIEBWERKSGONDEL
REAR ASSEMBLY FOR A TURBOJET ENGINE NACELLE

(30) Priorité: 14.10.2021 FR 2110922
(43) Date de publication de la demande: 21.08.2024
(73) Titulaire: Safran Nacelles, 76700 Gonfreville-l'Orcher (FR)
(72) Inventeur: BELLET, François, 77550 MOISSY-CRAMAYEL (FR); M'HASNI, Moncef, 77550 MOISSY-CRAMAYEL (FR)
(74) Mandataire: Ernest Gutmann - Yves Plasseraud S.A.S.
(86) Numéro de dépôt international: PCT/FR2022/051948
(87) Numéro de publication internationale: WO 2023/062329

(56) Documents cités:
- EP-A1- 3 701 171
- US-A- 6 122 892
- US-A1- 2008 112 796
- US-B2- 10 001 064

## Description

### Domaine technique de l'invention

L'invention concerne un ensemble arrière pour nacelle de turboréacteur, ainsi qu'un ensemble de propulsion comprenant une nacelle équipée d'un tel ensemble arrière.

### Etat de la technique antérieure

Un aéronef peut être propulsé par un ou plusieurs turboréacteurs, logés dans des nacelles fixées au carénage ou à la voilure de l'aéronef.

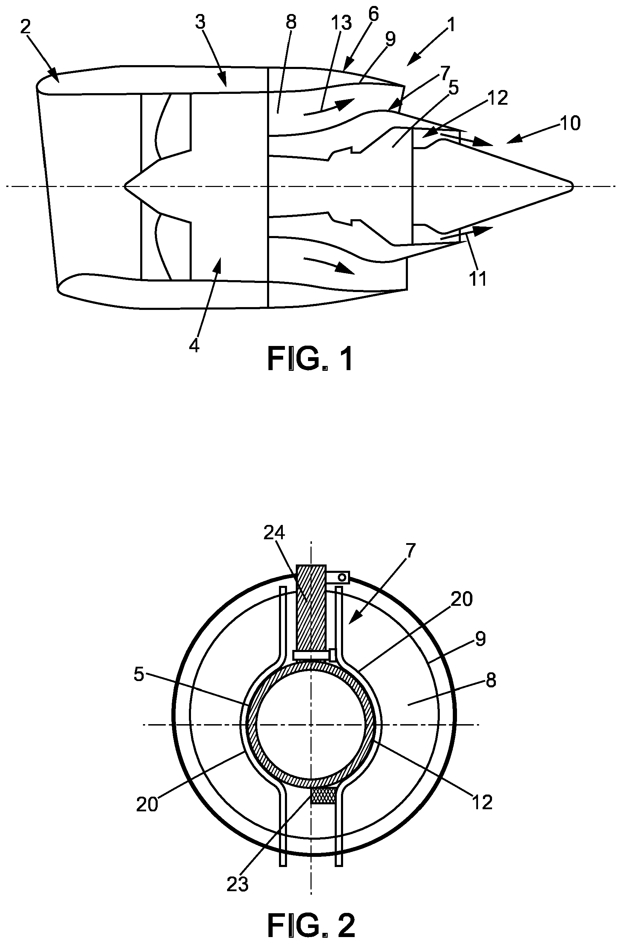

Un ensemble propulsif comprenant une nacelle 1 est représenté sur la figure 1.

La nacelle 1 présente une structure sensiblement tubulaire comprenant une lèvre 2 définissant une entrée d'air amont, un ensemble intermédiaire 3 destiné à entourer une soufflante 4 d'un turboréacteur 5, un ensemble arrière 6 comprenant une structure interne fixe 7, pouvant intégrer un inverseur de poussée et une structure externe fixe 9. L'ensemble arrière 6 entoure une chambre de combustion, un compresseur et une turbine du turboréacteur 5. La nacelle est généralement terminée par une tuyère d'éjection 10 en aval du turboréacteur.

Le turboréacteur est du type à double flux, apte à engendrer, d'une part, un flux d'air chaud ou flux primaire 11, issu de la chambre de combustion et circulant dans un compartiment cœur 12 du turboréacteur, et d'autre part, un flux d'air froid ou flux secondaire 13, issu de la soufflante 4 et circulant hors du turboréacteur, dans un espace annulaire appelé veine froide 8, entre le carénage externe 9 et la structure interne fixe 7 de la nacelle.

La température dans le compartiment cœur 12 est typiquement comprise entre 100°C et 400°C, tandis que la température dans la veine froide 8 est typiquement comprise entre -50°C et 100°C.

Comme représenté sur la figure 2, la structure interne fixe 7 comprend des parois 20 séparant une partie froide comprenant la veine froide 8, d'une partie chaude proche du réacteur, comprenant le compartiment cœur 12. Certains éléments contenus dans cette partie chaude peuvent être usés ou endommagés par les contraintes thermiques engendrées par les hautes températures qui y règnent. Cela est notamment le cas des dispositifs d'amortissement et d'arrêt 23, également appelés « bumpers », disposés dans la partie chaude de la nacelle au niveau d'un mât 24 d'accrochage ainsi qu'à l'opposé dudit mât 24, et fixés à la paroi 20 de la structure interne fixe 7.

Ces dispositifs d'amortissement et d'arrêt 23 permettent de limiter le déplacement de la structure interne fixe 7, notamment des parois 20, dus aux contraintes mécaniques en fonctionnement.

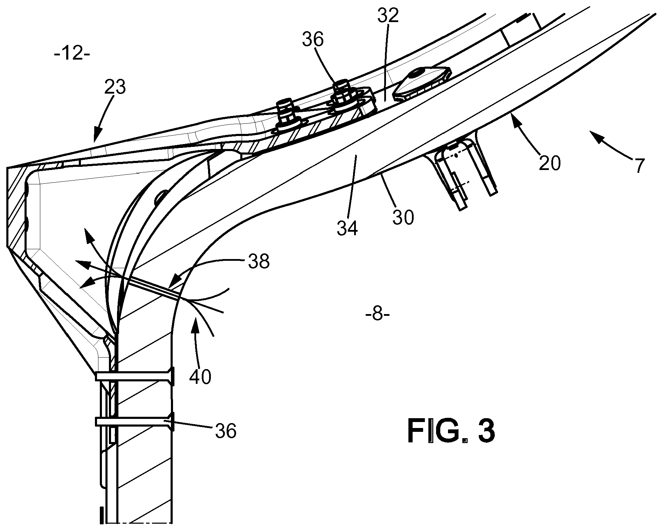

La figure 3 illustre de manière détaillée un tel dispositif d'amortissement et d'arrêt 23 fixé à une des parois composites 20 de la structure interne fixe 7.

La paroi composite 20 comprend une première peau 30 s'étendant en regard de la partie froide 8 et une seconde peau 32 s'étendant en regard de la partie chaude 12, ainsi qu'un ensemble médian 34 formant une pluralité de cellules entre les première et seconde peaux 30, 32.

Le dispositif d'amortissement et d'arrêt 23 est situé dans la partie chaude 12, et nécessite un refroidissement afin de prévenir des dommages en cas d'élévation trop forte de la température. Le dispositif d'amortissement et d'arrêt 23 est fixé à la paroi composite 20 au moyen d'organes de fixation 36 traversants les première et seconde peaux 30, 32, ce qui permet de les refroidir au contact du flux d'air circulant dans la partie froide 8.

De plus, la paroi composite 20 définit un orifice 38 traversant les première et seconde peaux 30, 32, en regard du dispositif d'amortissement et d'arrêt, prévu pour acheminer une partie 40 du flux d'air froid circulant dans la partie froide 8 vers ledit dispositif d'amortissement et d'arrêt 23 afin de le refroidir. Ce type d'orifice 38 de refroidissement est décrit plus en détail dans la demande FR 3 072 908 A1. Les documents US2008/112796 A1 et US6122892 A montrent des parois composites selon l'art antérieur.

Ces systèmes de refroidissement pour des éléments de nacelle de turboréacteur peuvent encore être améliorés. En effet, les perçages traversants de la paroi composite nécessaires pour l'orifice de refroidissement 38 et les organes de fixation 36 du dispositif d'amortissement et d'arrêt 23 nécessitent des étapes de fabrication supplémentaires et réduisent la surface totale de la paroi composite 20 réalisant une isolation acoustique du turboréacteur.

### Présentation de l'invention

L'invention vise à remédier à ces inconvénients. A cet effet, l'invention a pour objet un ensemble arrière pour nacelle de turboréacteur comprenant au moins une paroi composite destinée à séparer une partie froide d'une partie chaude, ledit ensemble arrière comprenant un élément à refroidir, la paroi composite comprenant des première et seconde peaux s'étendant respectivement en regard de la partie froide et de la partie chaude, séparées l'une de l'autre par un ensemble médian comprenant des cellules délimitées entre elles par des parois internes, la première peau comprenant une pluralité d'orifices traversants reliant la partie froide et les cellules, les parois internes comprenant des orifices traversants reliant les cellules entre elles, et la seconde peau comprenant au moins un orifice traversant débouchant en regard de l'élément à refroidir.

Un tel ensemble arrière permet un refroidissement amélioré de l'élément à refroidir, avec un assemblage simplifié et moins couteux, tout en conservant une isolation acoustique maximale en n'ayant pas recours à des perçages traversants.

La paroi composite peut être une paroi d'une structure interne fixe d'un inverseur de poussée. Une telle paroi sépare des régions froides et chaudes et bénéficie beaucoup d'une isolation acoustique importante pour couvrir le bruit de la turbomachine.

L'élément à refroidir est un dispositif d'amortissement et d'arrêt fixé sur la paroi composite.

L'élément à refroidir est fixé à la paroi composite par des organes de fixation traversant la seconde peau, les orifices dans les parois internes étant situés plus proches de la seconde peau que de la première peau.

Une telle caractéristique permet un refroidissement supplémentaire des organes de fixation par le flux d'air dans les cellules, et permet de se dispenser d'organes de fixation traversants. Les organes de fixation sont à l'écart de la première peau.

Notamment, les organes de fixation ne traversent pas la première peau.

De tels organes de fixation améliorent encore l'isolation acoustique mise en œuvre par la paroi. La partie froide peut être une veine froide de la nacelle de turboréacteur, et la partie chaude est un espace de réception d'un compartiment cœur de turboréacteur.

La veine froide est par exemple un espace annulaire délimité par un carénage externe de la nacelle d'une part et la paroi composite d'autre part, destiné à accueillir un flux d'air froid.

Le compartiment cœur est une zone située entre la structure interne fixe de l'inverseur et le moteur.

Les cellules peuvent être des alvéoles à section carrée, rectangulaire, triangulaire ou hexagonale, dans un plan parallèle aux première et seconde peaux.

La seconde peau peut comprendre un unique orifice traversant débouchant en regard de l'élément à refroidir, les orifices dans les parois internes étant agencés de manière convergente vers cet unique orifice traversant.

Alternativement, la seconde peau peut comprendre une pluralité d'orifices traversant débouchant en regard du même élément à refroidir, des orifices internes respectifs distincts étant agencés de manière convergente vers chacun des orifices traversants.

L'invention concerne aussi un ensemble de propulsion comprenant une nacelle comprenant un ensemble arrière tel que décrit plus haut et un turboréacteur reçu dans la nacelle.

L'invention concerne en outre un aéronef comprenant au moins un ensemble de propulsion tel que décrit plus haut.

Ledit aéronef peut être un avion.

### Brève description des figures

[Fig. 1] la figure 1 est une vue en coupe longitudinale d'un ensemble de propulsion de l'état de la technique, comprenant une nacelle et un turboréacteur,
[Fig. 2] la figure 2 est une vue en coupe transversale de l'ensemble propulsif de la figure 1,
[Fig. 3] la figure 3 est une vue en coupe transversale de détail de la nacelle des figures 1 et 2,
[Fig. 4] la figure 4 est une vue en coupe transversale de détail d'un ensemble arrière de nacelle selon l'invention, et
[Fig. 5] la figure 5 est une vue en coupe d'un ensemble médian de l'ensemble arrière de la figure 4.

### Description détaillée de l'invention

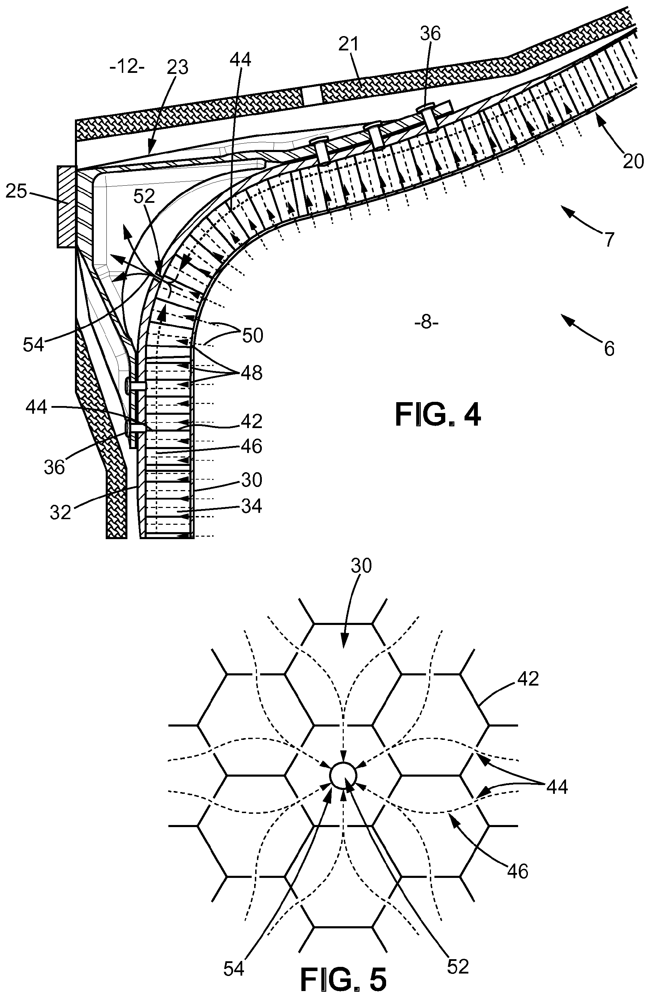

Une partie de la structure interne fixe 7 d'un ensemble arrière 6 de nacelle selon l'invention est représentée sur la figure 4. Une telle nacelle fait partie d'un ensemble de propulsion comprenant un turboréacteur à double flux et une nacelle dans laquelle est logé ledit turboréacteur.

Un tel ensemble de propulsion est destiné à équiper un aéronef, par exemple un avion.

La structure interne fixe 7 fait partie de l'ensemble arrière 6, comme expliqué précédemment, et comprend au moins une paroi composite 20 séparant une zone chaude 12 comprenant le compartiment cœur d'une zone froide 8 comprenant la veine froide, dans laquelle circule un flux d'air froid.

La structure interne fixe 7 comprend également une couche de protection thermique 21 et un dispositif d'amortissement et d'arrêt 23, également appelé « bumper », fixé à la paroi composite 20 et comportant un élément de contact 25 destiné à venir en contact avec le turboréacteur.

Le dispositif d'amortissement et d'arrêt 23 est situé dans la zone chaude 12 et n'est pas recouvert par la couche de protection thermique 21, afin de pouvoir porter le réacteur de sorte que le dispositif d'amortissement et d'arrêt 23 nécessite d'être refroidit.

La paroi composite 20 comprend une première peau 30 et une seconde peau 32, s'étendant respectivement en regard de la zone froide 8 et de la zone chaude 12.

Les première et seconde peaux 30, 32 sont des peaux composites, comprenant par exemple des fibres de verre ou de carbone noyées dans une matrice en polymère ou en résine.

La paroi composite 20 comprend en outre un ensemble médian 34 formant une pluralité de cellules, disposé entre et fixé aux première et seconde peaux.

L'ensemble médian 34 est par exemple une structure de type nid d'abeille, dont les cellules sont délimitées par des parois 42 réalisées en matériau métallique, polymère, résine, ou bien en matériau composite comprenant des fibres de verre ou de carbone.

Les cellules de l'ensemble médian 34 sont des alvéoles qui présentent des sections, dans un plan parallèle localement aux première et seconde peaux 30, 32, de forme carrée, rectangulaire, triangulaire ou hexagonale.

Comme représenté en détail sur la figure 5, les parois 42 définissent des orifices internes 44 traversants reliant les cellules entre elles, de sorte qu'un flux d'air interne 46 peut circuler à travers l'ensemble médian 34 de manière continue.

Les orifices internes 44 peuvent également jouer un rôle de drainage de l'ensemble médian 34.

La première peau 30 définit une pluralité d'orifices 48 traversants qui mettent en communication la veine froide 8 et les cellules de l'ensemble médian 34, de sorte qu'un flux d'air froid 50 peut être prélevé dans la veine froide 8 et s'ajouter au flux interne 46 circulant dans l'ensemble médian 34.

La seconde peau 32 définit au moins un orifice de refroidissement 52 traversant, qui débouche en regard du dispositif d'amortissement et d'arrêt 23 et met en communication l'ensemble médian 34 et la partie chaude 12.

L'orifice de refroidissement 52 permet de concentrer le flux interne 46 circulant dans l'ensemble médian 34 en un flux de refroidissement 54 dirigé vers le dispositif d'amortissement et d'arrêt 23 afin de le refroidir.

L'orifice de refroidissement 52 ne traverse pas la première peau 30, de sorte qu'aucun perçage traversant n'est nécessaire, ce qui améliore l'isolation acoustique mise en œuvre par la paroi composite 20.

Dans le mode de réalisation représenté sur les figures, l'orifice de refroidissement 52 est unique, et les orifices 44 dans les parois internes 42 sont agencés de manière convergente vers cet unique orifice 52 traversant, comme représenté sur la figure 5. Ainsi, le flux d'air 46 circulant dans l'ensemble médian 34 converge vers l'orifice de refroidissement 52.

Alternativement, la seconde peau peut comprendre une pluralité d'orifices de refroidissement 52 débouchant en regard du même élément à refroidir 23. Dans ce cas, des orifices internes 44 respectifs distincts sont agencés de manière convergente vers chacun des orifices de refroidissement 52, de manière à les alimenter tous en air froid issu de la veine froide 8.

Le dispositif d'amortissement et d'arrêt 23 est fixé à la seconde peau 32 par des organes de fixation 36 qui traversent ladite seconde peau 32.

Les organes de fixation 36 sont refroidis par le passage du flux interne 46, et ne sont pas en contact direct avec la veine froide 8.

Les orifices internes 44 s'ouvrent notamment dans les parois 42 des cellules voisines desdits organes de fixation 36, de manière à faire circuler le flux d'air froid originaire de la veine froide 8 au voisinage des organes de fixation 36. Cela permet de refroidir plus efficacement les organes de fixation 36 et le dispositif d'amortissement et d'arrêt 23.

Les organes de fixation 36 ne traversent pas la première peau 30, de sorte qu'aucun perçage traversant n'est nécessaire ici non plus, ce qui améliore encore l'isolation acoustique mise en œuvre par la paroi composite 20.

Avantageusement, les orifices internes 44 sont situés plus prêt de la seconde peau 32 que de la première peau 30, afin de rapprocher le flux interne 46 des organes de fixation 36 et d'améliorer leur refroidissement.

La nacelle selon l'invention permet ainsi d'améliorer le refroidissement du dispositif d'amortissement et d'arrêt 23 ainsi que des organes de fixation 36 en présentant une surface de collecte d'air froid plus importante que celle des dispositifs préexistants, et en faisant circuler l'air froid dans l'ensemble médian 34 de la paroi 20.

De plus, cette méthode de refroidissement permet de se dispenser de perçages traversants la paroi composite 20 en totalité, ce qui améliore son isolation acoustique et simplifie sa fabrication.

L'invention peut être étendue à tout type d'élément nécessitant un refroidissement fixé à une paroi composite séparant une partie froide d'une partie chaude, notamment à d'autres éléments fixés à une paroi de la structure interne fixe 7 de la nacelle 1.

## Revendications

1. Ensemble arrière (6) pour nacelle (1) de turboréacteur comprenant au moins une paroi composite (20) destinée à séparer une partie froide (8) d'une partie chaude (12), ledit ensemble arrière (6) comprenant un élément à refroidir (23), la paroi composite (20) comprenant des première et seconde peaux (30, 32) s'étendant respectivement en regard de la partie froide (8) et de la partie chaude (12), séparées l'une de l'autre par un ensemble médian (34) comprenant des cellules délimitées entre elles par des parois internes (42), la première peau (30) comprenant une pluralité d'orifices (48) traversants reliant la partie froide (8) et les cellules, les parois internes (42) comprenant des orifices (44) traversants reliant les cellules entre elles, et la seconde peau (32) comprenant au moins un orifice (52) traversant débouchant en regard de l'élément à refroidir (23),
dans lequel l'élément à refroidir (23) est un dispositif d'amortissement et d'arrêt fixé sur la paroi composite (20) par des organes de fixation (36) traversant la seconde peau (32), les orifices (44) dans les parois internes (42) étant situés plus proches de la seconde peau (32) que de la première peau (30).

2. Ensemble arrière (6) selon la revendication 1, dans lequel la paroi composite (20) est une paroi d'une structure interne fixe (7) d'un inverseur de poussée.

3. Ensemble arrière (6) selon la revendication 1, dans lequel les organes de fixation (36) sont à l'écart de la première peau (30).

4. Ensemble arrière (6) selon l'une des revendications précédentes, dans lequel la partie froide (8) est une veine froide de la nacelle (1) de turboréacteur, et la partie chaude (12) est un espace de réception d'un compartiment cœur de turboréacteur.

5. Ensemble arrière (6) selon l'une des revendications précédentes, dans lequel les cellules sont des alvéoles à section carrée, rectangulaire, triangulaire ou hexagonale, dans un plan parallèle aux première et seconde peaux (30, 32).

6. Ensemble arrière (6) selon l'une des revendications précédentes, dans lequel la seconde peau (32) comprend un unique orifice (52) traversant débouchant en regard de l'élément à refroidir (23), les orifices (44) dans les parois internes (42) étant agencés de manière convergente vers cet unique orifice (52) traversant.

7. Ensemble arrière (6) selon l'une des revendications 1 à 5, dans lequel la seconde peau (32) comprend une pluralité d'orifices (52) traversant débouchant en regard du même élément à refroidir (23), des orifices internes (44) respectifs distincts étant agencés de manière convergente vers chacun des orifices (52) traversants.

8. Ensemble de propulsion comprenant une nacelle (1) comprenant un ensemble arrière (6) selon l'une des revendications précédentes et un turboréacteur (5) reçu dans la nacelle (1).

## Patentansprüche

1. Heckanordnung (6) für eine Turbostrahltriebwerksgondel (1), umfassend zumindest eine Verbundwand (20), die dazu bestimmt ist, einen Kaltabschnitt (8) von einem Heißabschnitt (12) zu trennen, wobei die Heckanordnung (6) ein zu kühlendes Element (23) umfasst, wobei die Verbundwand (20) eine erste und eine zweite Haut (30, 32) umfasst, die sich jeweils dem Kaltabschnitt (8) bzw. dem Heißabschnitt (12) gegenüberliegend erstrecken und durch einen Mittenbereich (34) voneinander getrennt sind, der Zellen umfasst, die durch Innenwände (42) voneinander begrenzt sind, wobei die erste Haut (30) eine Vielzahl von Durchgangsöffnungen (48) aufweist, die den Kaltabschnitt (8) und die Zellen verbinden, wobei die Innenwände (42) Durchgangsöffnungen (44) umfassen, die die Zellen miteinander verbinden, und wobei die zweite Haut (32) zumindest eine Durchgangsöffnung (52) aufweist, die dem zu kühlenden Element (23) gegenüberliegend mündet,
wobei das zu kühlende Element (23) eine Dämpfungs- und Arretiervorrichtung ist, die an der Verbundwand (20) durch Befestigungselemente (36) befestigt ist, die durch die zweite Haut (32) hindurch verlaufen, wobei die Öffnungen (44) in den Innenwänden (42) näher an der zweiten Haut (32) als an der ersten Haut (30) liegen.

2. Heckanordnung (6) nach Anspruch 1,
wobei die Verbundwand (20) eine Wand einer festen Innenstruktur (7) einer Schubumkehreinrichtung ist.

3. Heckanordnung (6) nach Anspruch 1,
wobei die Befestigungselemente (36) von der ersten Haut (30) beabstandet angeordnet sind.

4. Heckanordnung (6) nach einem der vorstehenden Ansprüche,
wobei der Kaltabschnitt (8) ein Kaltströmungskanal der Turbostrahltriebwerksgondel (1) ist und der Heißabschnitt (12) ein Aufnahmeraum für einen Kernbereich des Turbostrahltriebwerks ist.

5. Heckanordnung (6) nach einem der vorstehenden Ansprüche,
wobei die Zellen Waben mit quadratischem, rechteckigem, dreieckigem oder sechseckigem Querschnitt in einer Ebene parallel zur ersten und zweiten Haut (30, 32) sind.

6. Heckanordnung (6) nach einem der vorstehenden Ansprüche,
wobei die zweite Haut (32) eine einzige Durchgangsöffnung (52) aufweist, die dem zu kühlenden Element (23) gegenüberliegend mündet, wobei die Öffnungen (44) in den Innenwänden (42) so angeordnet sind, dass sie zu dieser einzigen Durchgangsöffnung (52) hin konvergieren.

7. Heckanordnung (6) nach einem der Ansprüche 1 bis 5,
wobei die zweite Haut (32) mehrere Durchgangsöffnungen (52) aufweist, die demselben zu kühlenden Element (23) gegenüberliegend münden, wobei jeweilige unterschiedliche Innenöffnungen (44) so angeordnet sind, dass sie zu jeder der Durchgangsöffnungen (52) hin konvergieren.

8. Antriebsanordnung mit einer Gondel (1), umfassend eine Heckanordnung (6) nach einem der vorstehenden Ansprüche und ein in der Gondel (1) aufgenommenes Turbostrahltriebwerk (5).

## Claims

1. Rear assembly (6) for a turbojet engine nacelle (1) comprising at least one composite wall (20) intended to separate a cold portion (8) from a hot portion (12), said rear assembly (6) comprising an element to be cooled (23), the composite wall (20) comprising first and second skins (30, 32) which extend facing the cold portion (8) and the hot portion (12) respectively, and which are separated from one another by a middle assembly (34) comprising cells delimited by internal walls (42),
the first skin (30) comprising a plurality of through-openings (48) connecting the cold portion (8) and the cells, the internal walls (42) comprising through-openings (44) connecting the cells to one another, and the second skin (32) comprising at least one through-opening (52) opening facing the element to be cooled (23),
wherein the element to be cooled (23) is a bumper and damper device fixed to the composite wall (20) by fastening members (36) which penetrate through the second skin (32), the openings (44) in the internal walls (42) being located closer to the second skin (32) than to the first skin (30).

2. Rear assembly (6) according to claim 1, wherein the composite wall (20) is a wall of a fixed internal structure (7) of a thrust reverser.

3. Rear assembly (6) according to claim 1, wherein the fastening members (36) are at a distance from the first skin (30).

4. Rear assembly (6) according to one of the preceding claims, wherein the cold portion (8) is a cold duct of the turbojet engine nacelle (1), and the hot portion (12) is a space for receiving a core compartment of a turbojet engine.

5. Rear assembly (6) according to one of the preceding claims, wherein the cells are in a honeycomb structure having a square, rectangular, triangular, or hexagonal cross-section in a plane parallel to the first and second skins (30, 32).

6. Rear assembly (6) according to one of the preceding claims, wherein the second skin (32) comprises a single through-opening (52) which opens facing the element to be cooled (23), the openings (44) in the internal walls (42) being arranged in a convergent manner towards this single through-opening (52).

7. Rear assembly (6) according to one of claims 1 to 5, wherein the second skin (32) comprises a plurality of through-openings (52) which open facing the same element to be cooled (23), respective separate internal openings (44) being arranged in a convergent manner towards each of the through-openings (52).

8. Propulsion assembly comprising a nacelle (1) comprising a rear assembly (6) according to one of the preceding claims and a turbojet engine (5) received in the nacelle (1).
